# EUROPÄISCHE PATENTSCHRIFT

(11) **EP 3 214 970 B1**
(45) Veröffentlichungstag und Bekanntmachung des Hinweises auf die Patenterteilung: **14.09.2022**
(21) Anmeldenummer: 15795106.2
(22) Anmeldetag: 06.11.2015
(51) Int. Cl.: A46B 7/02, A61C 15/00

(54) **INTERDENTALBÜRSTE UND PUTZORGAN FÜR EINE SOLCHE**
INTERDENTAL BRUSH AND CLEANING DEVICE FOR THE SAME
BROSSE INTERDENTAIRE ET ORGANE DE NETTOYAGE POUR CELLE-CI

(30) Priorität: 07.11.2014 CH 17312014
(43) Veröffentlichungstag der Anmeldung: 13.09.2017
(73) Patentinhaber: Eidenbenz, Stefan, 8126 Zumikon (CH)
(72) Erfinder: Eidenbenz, Stefan, 8126 Zumikon (CH)
(74) Vertreter: Detken, Andreas
(86) Internationale Anmeldenummer: PCT/CH2015/000164
(87) Internationale Veröffentlichungsnummer: WO 2016/070294

(56) Entgegenhaltungen:
- WO-A1-2015/135459
- CN-U- 203 801 948
- DE-A1- 19 849 531
- US-A- 4 367 759
- US-A1- 2004 197 735
- US-A1- 2008 254 408
- US-A1- 2009 029 323

## Beschreibung

Die Erfindung betrifft eine Interdentalbürste und ein Putzorgan für eine solche, gemäss den unabhängigen Ansprüchen.

### Stand der Technik

Es gibt im Bereich der Zahnhygiene eine sehr breite Auswahl an Lösungen zur Reinigung der Zähne. Normale Zahnbürsten zur Reinigung der Zahnflächen sind in vielen Variationen erhältlich. Dabei wurden auch elektrisch betriebene Zahnbürsten entwickelt, die imstande sind, Bewegungen des Bürstenkopfes mit hohen Frequenzen zu erzeugen. Damit können die Zähne an den zugänglichen Stellen in effizientester Weise gereinigt werden. Alle herkömmlichen Zahnbürsten und auch die elektrisch Betriebenen haben aber den Nachteil, dass sie den Biofilm zwischen den Zähnen nicht entfernen können. Es wurden verschiedene Methoden entwickelt, um diesen Approximalraum zu reinigen.

### Zahnseide:

Die Zahnseide hat die grösste Wirkung in der Kariesprophylaxe an den Zahnkontaktpunkten. Sie wird als dünner Faden über den Kontaktpunkt in den Zahnzwischenraum eingeführt. Dabei wird die Plaque abgestreift. Sie dient vor allem dazu, Karies zu verhindern weil sie im Bereich der sich berührenden Zähne die plaquebedingte Zahnschmelzentkalkung stark reduzieren kann. Nachteilig dabei sind die umständliche Handhabung und die Gefahr von Zahnfleischverletzungen bei unsachgemässer Anwendung. In gewissen Fällen (Engstand) ist die Anwendung sehr schwierig oder gänzlich ausgeschlossen; z.B. wenn benachbarte Zähne verblockt wurden (Brücken, Kieferorthopädische Apparaturen, Retainer).

### Interdentalbürsten:

Die Interdentalbürsten finden vor allem Anwendung im durch Knochenschwund geöffneten Zahnzwischenraum. In der täglichen Anwendung sind sie der Hauptpfeiler in der modernen Prophylaxe gegen Parodontopathien. Die Pflege des Approximalraumes mit Interdentalbürsten erlangte auch einen hohen Stellenwert bei der Verhinderung von Wurzelkaries. Dies ist eine moderne Erscheinung als Folge einer verminderten Speichelflussrate. Störungen im Speichelfluss treten sehr häufig in der Geriatrie sowie als Nebenwirkung vieler Medikamente auf. Unabdingbar ist die Interdentalbürste bei der festsitzenden Rekonstruktion durch Implantate. Da benachbarte Implantate in der Regel verblockt werden, gibt es zur Reinigung zwischen den Implantaten keine Alternativen zu den Bürsten. Die Interdentalbürste kann direkt mit dem Finger oder gestielt an einem Griff in den Zahnzwischenraum eingeführt werden. Die Putzwirkung wird durch das einfache Verstemmen eines adäquaten Bürstchens im Trigonum begrenzt durch Zahn, Nachbarzahn und Gingiva erzielt. Kleinste Nischen oder wurzelbedingte doppeltkonkave Stellen können nachweislich und gründlich vom Biofilm befreit werden. Die Interdentalbürste ist in der Lage gegenüber Zahnstäbchen, Interdentalhölzchen oder filzbeschichteten Stäbchen, auch nach Passage eines Isthmus durch Aufrichten der Borsten eine Putzwirkung zu entfalten. Nachteilig in der Anwendung der Interdentalbürstchen ist die Handhabung in Bezug auf das Einführen, das Einknicken der dünnen Bürstchen sowie die Verletzungsgefahr. Während das Einführen der Interdentalbürstchen sich im sichtbaren Bereich der Zahnzwischenräume vor dem Spiegel gut einüben lässt, tauchen ab dem zweiten Prämolaren spätestens aber zwischen den beiden ersten Molaren Probleme auf. Erstens legt sich mit zusätzlicher Mundöffnung die Wangenschleimhaut straffer an die Dentition. Das Einführen eines Bürstchens in einem senkrechten Winkel zur facialen Fläche der Molaren wird stark behindert, wenn nicht verunmöglicht. Das führt dazu, dass der Anwender versucht ist, den Mund beim Einführen zwischen den hinteren Zähnen wieder zu schliessen, was zum zweiten Problem führt. Eine sichtbare Kontrolle über Position und Richtung des filigranen Interdentalbürstchens ist nicht mehr gegeben. Das Einführen in den Approximalraum wird dann schnell zur Pröbelei wenn nicht ein Finger der zweiten Hand zum Abhalten der Wange beigezogen wird. Der tägliche Umgang mit Interdentalbürsten stellt relativ hohe Anforderungen an den Patienten. In einer unbequemen Haltung stehend, in der Regel über dem Waschbecken, zum Badezimmerspiegel hin nach vorne geneigt, wird die Anwendung als mühsame Pflicht wahrgenommen. Die Handhabung verlangt Aufmerksamkeit und gewisse motorische Fähigkeiten, die mit dem Älterwerden nachlassen.

Aus der US 2009/00239323 A1 ist eine Interdentalbürste bekannt, die einen Handgriff und ein darin aufgenommenes Putzorgan aufweist. Das Putzorgan weist einen Schaft auf, an dessen einem Ende eine Bürste und an dessen anderem Ende ein Bedienelement angeordnet ist. Der Schaft ist von einem gekrümmten Bereich des Handstücks umgeben. Mittels des Bedienelements ist das Putzorgan relativ zum Handgriff verschiebbar. Dadurch kann die Bürste aus dem Hals herausgeschoben und in einem Zahnzwischenraum hinund hergeschoben werden. Die Krümmung des gekrümmten Bereichs ist verstellbar.

Aus der US 2008/0254408 A1 ist eine Vorrichtung zur Reinigung von Zähnen bekannt, bei der ein Putzorgan zur Reinigung eines Interdentalbereichs motorisch drehbar ist.

EP3117796A1 (Stand der Technik nach Art. 54(3) EPÜ) und CN203801948U offenbaren eine Interdentalbürste mit den Merkmalen des Oberbegriffs des Anspruchs 1 und ein Putzorgan mit den Merkmalen des Oberbegriffs des Anspruchs 9.

### Darstellung der Erfindung

Es ist Aufgabe der Erfindung eine Interdentalbürste zu schaffen, die die vorstehend genannten Probleme zumindest minimiert. Insbesondere liegt die Aufgabe der Erfindung darin, eine ergonomische und möglichst bequeme Art der Reinigung von Zahnzwischenräumen zu ermöglichen, wobei gleichzeitig eine hohe Reinigungswirkung erzielt werden kann und die Gefahr von Verletzungen minimiert wird.

Diese Aufgabe wird in einem ersten Aspekt der Erfindung mittels einer Interdentalbürste gemäss Anspruch 1 gelöst.

Eine erfindungsgemässe Interdentalbürste umfasst einen Körper mit einem Griff und einen Führungskanal. Ferner umfasst die Interdentalbürste ein im Führungskanal angeordnetes Verbindungselement, das einen Putzkörper mit einem Bedienelement verbindet. Das Verbindungselement mit dem Putzkörper ist mittels des Bedienelements hin und her verschiebbar. Die Verschiebung findet zwischen einer eingezogenen Position, in der der Putzkörper innerhalb des Führungskanals angeordnet ist, und einer ausgefahrenen Position, in der der Putzkörper an einem distalen Ende des Führungskanals, bezogen auf den Griff, aus dem Führungskanal hinausragt, statt. Am distalen Ende des Führungskanals ist ein flexibles Positionierelement vorgesehen. Das Positionierelement ist an einem Approximalraum zwischen zwei Zähnen derart ansetzbar, dass der Putzkörper während der Verschiebung in die ausgefahrene Position in den Approximalraum hineindringt. Das Positionierelement verläuft zum distalen Ende hin im Wesentlichen trichterförmig. Die Hinund Herverschiebung des Putzkörpers ist durch eine Bewegung des Bedienelements relativ zum Positionierelement der Interdentalbürste bewirkbar. Das Verbindungselement mit dem Putzkörper ist auswechselbar. Das Verbindungselement ist mittels einer Clips-Verbindung am Bedienelement befestigbar. Dabei weist das Verbindungselement ein Kopplungselement in Form eines Querstifts durch das Verbindungselement auf, und das Bedienelement weist eine Aufnahme für das Kopplungselement auf.

Ein Vorteil der erfindungsgemässen Interdentalbürste liegt darin, dass die Bewegung des Putzkörpers von ausserhalb des Munds erfolgt, was die Bedienung der Interdentalbürste stark vereinfacht. Ferner ist es vorteilhaft das Positionierelement vorzusehen, mit dessen Hilfe der Putzkörper leicht und intuitiv an seiner bestimmungsgemässen Position für die Reinigung der Bereiche zwischen den Zähnen heranführbar ist.

Der trichterförmige Verlauf des Positionierelements zum distalen Ende hin ist besonders vorteilhaft, um den betreffenden Approximalraum zwischen zwei Zähnen schnell zu finden und die Interdentalbürste korrekt anzusetzen. Mit anderen Worten besitzt die Trichterform inhärent eine "Autozentrierfunktion".

In einer bevorzugten Ausführungsform ist das Positionierelement elastisch verformbar. Es kann aus einem gummiartigen Material hergestellt sein, beispielsweise aus Gummi oder aus Silikon. Dies ist besonders vorteilhaft da sich das Positionierelement an die Kontur des Approximalraums anpassen kann und daher einen stabileren Sitz hat. Ein weiterer Vorteil besteht darin, dass die Gefahr der Verletzung von Zahnfleisch oder Zahn minimiert wird, da das Positionierelement weich ist. Der Benutzer sucht den Approximalraum und positioniert die Interdentalbürste am Approximalraum bevor er den Putzkörper aus der eingezogenen Stellung bewegt. Durch diese Vorgehensweise besteht kein Risiko, dass sich der Benutzer während des Positionierungsprozesses mit dem spitzen Putzkörper verletzt.

Vorzugsweise weist der Führungskanal in Bezug auf eine Längsachse des Körpers der Interdentalbürste mindestens eine Biegung auf, derart, dass das freie Ende des Führungskanals nicht parallel zur Längsachse ist. Mit dieser der Ergonomie dienenden Massnahme wird die Bedienung der Interdentalbürste vereinfacht, da der Benutzer die Interdentalbürste in einer natürlichen Arm bzw. Handstellung während der Zahnreinigung halten kann.

In einer Ausführungsform hat eine Öffnung des Positionierelements, durch welche der Putzkörper in die ausgefahrene Position nach aussen tritt, einen kleineren Durchmesser als der Putzkörper, was den Vorteil mit sich bringt, dass die Borsten des Putzkörpers beim Einziehen in die eingezogene Position an der Öffnung des Positionierelements nach aussen gebogen werden und durch die Reibung an der Kontur der Öffnung des Positioniermittels gereinigt wird. Es ist auch möglich, den Putzkörper mit denselben hin und her Bewegungen des Bedienelements wie beim Putzen unter fliessendem Wasser gründlicher zu reinigen.

In einer Ausführungsform weist der Führungskanal eine Öffnung durch seine Mantelfläche auf, durch welche Öffnung Luft zwischen einem Innenraum des Führungskanals und der Umgebung zirkulieren kann. Dabei ist die mindestens eine Öffnung des Führungskanals vorzugsweise in einem Bereich angeordnet, in dem der Putzkörper in der eingezogenen Position zu ruhen kommt. Der Vorteil einer solchen Öffnung liegt darin, dass der Innenraum des Führungskanals belüftet werden kann, so dass der Putzkörper, der nach Gebrauch feucht sein kann, schnell trocknen kann und sich beispielsweise keine Pilze oder Bakterien im Inneren des Führungskanals ansammeln können. Ferner kann das Innere des Führungskanals leichter mit Wasser ausgespült werden. Weiter kann die Öffnung als Einführöffnung für eine Medikation verwendet werden.

Ein zweiter Aspekt der Erfindung betrifft ein Putzorgan gemäss Anspruch 9. Das Putzorgan ist für eine Interdentalbürste nach dem ersten Aspekt der Erfindung ausgebildet. Es umfasst einen Putzkörper und ein Verbindungselement oder besteht aus einem Putzkörper und einem Verbindungselement. Der Putzkörper ist in axialer Richtung des Verbindungselements an dessen distalem Ende angeordnet. Das Verbindungselement ist aus einem bezüglich Biegung flexiblen Material hergestellt und mittels eines Kopplungselements des Verbindungselements im Führungskanal der Interdentalbürste befestigbar. Das Verbindungselement ist mittels einer Clips-Verbindung am Bedienelement befestigbar. Dabei weist das Verbindungselement ein Kopplungselement in Form eines Querstifts durch das Verbindungselement auf.

In einer bevorzugten Ausführungsform umfasst der Putzkörper einen Basiskörper mit mindestens einem Vorsprung. Am freien Ende des Putzkörpers ist ein spitzes, stabförmiges Element des Putzkörpers in Verlängerung des Basiskörpers vorgesehen.

Der Putzkörper ist bevorzugt einstückig aus einem Material herstellt, insbesondere gegossen.

Ein Vorteil des erfindungsgemässen Putzorgans ist die Möglichkeit der Austauschbarkeit mit einem anderen Putzorgan, wobei unerheblich ist, welche Art von Putzkörper im Putzorgan integriert ist. Ein weiterer Vorteil liegt darin, dass das spitze, stabförmige Element eine zusätzliche Hilfe für die Positionierung des Putzkörpers an der richtigen Stellen am Approximalraum darstellt.

Das Putzorgan wird bevorzugt zum Ersetzen des Putzkörpers und des Verbindungselements der Interdentalbürste nach dem ersten Aspekt der Erfindung verwendet. Dies ermöglicht eine kostengünstige und materialsparende Lösung, da der Körper der Interdentalbürste mit dem Führungskanal und dem Positionierelement nur einmal erworben werden müssen und nur das Putzorgan nach der Abnutzung eines Putzkörpers ausgetauscht werden muss.

### Kurze Beschreibung der Zeichnungen

Im Folgenden werden Ausführungsbeispiele der Erfindung an Hand der Figuren näher erläutert. Dabei zeigt
Figur 1 eine Ausführungsform einer Interdentalbürste, die hinsichtlich der Verbindung zwischen Verbindungselement und Bedienelement nicht erfindungsgemäss ausgestaltet ist,
Figur 2 ein Verbindungselement mit Putzkörper für die Interdentalbürste nach Fig. 1, wobei das Verbindungselement nicht erfindungsgemäss ausgestaltet ist;
Figur 3 einen Schnitt durch einen Körper der Interdentalbürste,
Figur 4 eine Seitenansicht einer weiteren Ausführungsform einer Interdentalbürste, die die hinsichtlich der Verbindung zwischen Verbindungselement und Bedienelement nicht erfindungsgemäss ausgestaltet ist,
Figur 5 eine perspektivische Ansicht der Interdentalbürste nach Fig. 4,
Figur 6 eine Ausführungsform einer erfindungsgemässen Interdentalbürste,
Figur 7 Detail A aus Fig. 6,
Figur 8 ein erfindungsgemässes Putzorgan mit einer ersten Ausführungsform eines erfindungsgemässen Putzkörpers,
Figur 9 Detail B aus Fig. 8,
Figur 10 ein erfindungsgemässes Putzorgan mit einer zweiten Ausführungsform eines erfindungsgemässen Putzkörpers,
Figur 11 Detail C aus Fig. 10, und
Figur 12 - 16 weitere Ausführungsformen eines Putzkörpers eines erfindungsgemässen Putzorgans.

### Wege zur Ausführung der Erfindung

Strukturell bzw. funktionell gleichwirkende Elemente werden in den die verschiedenen Ausführungsformen der Interdentalbürste darstellenden Figuren mit gleichen Bezugszeichen gekennzeichnet.

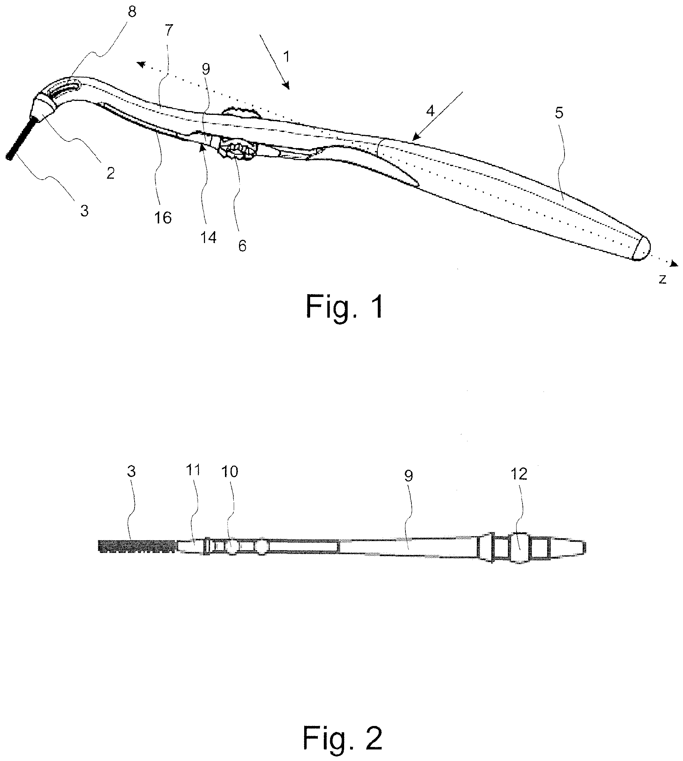

Figur 1 zeigt eine Ausführungsform einer Interdentalbürste 1, die hinsichtlich der Verbindung zwischen Verbindungselement und Bedienelement nicht erfindungsgemäss ausgestaltet ist. Die Interdentalbürste 1 hat einen Körper 4 mit einem Griff 5 und einem Führungskanal 7. In dieser Ausführungsform sind der Griff 5 und der Führungskanal 7 einstückig gebaut, was vorteilhafterweise billiger in der Herstellung ist. In einer anderen Ausführungsform kann der Führungskanal 7 von Griff 5 abnehmbar sein. Dabei kann es sich zwischen Griff 5 und Führungskanal 7 um eine Schraubverbindung handeln. Diese Ausführungsform hat den Vorteil, dass der Führungskanal 7 ausgewechselt werden kann.

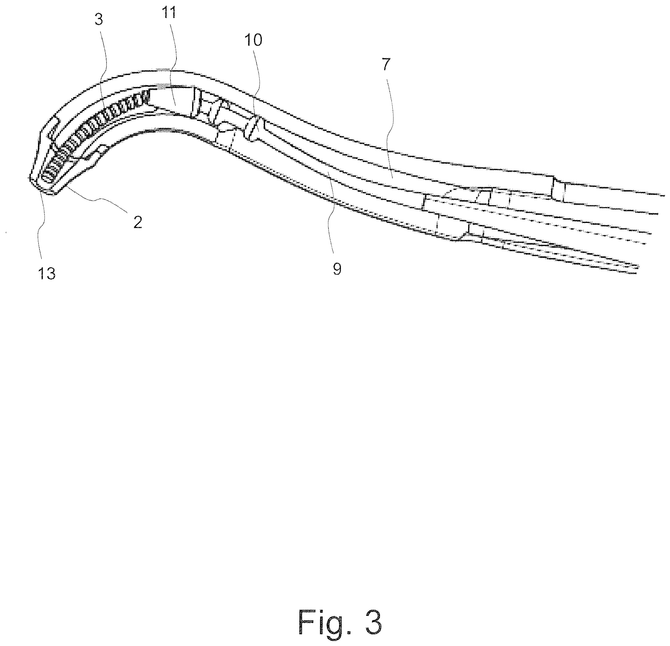

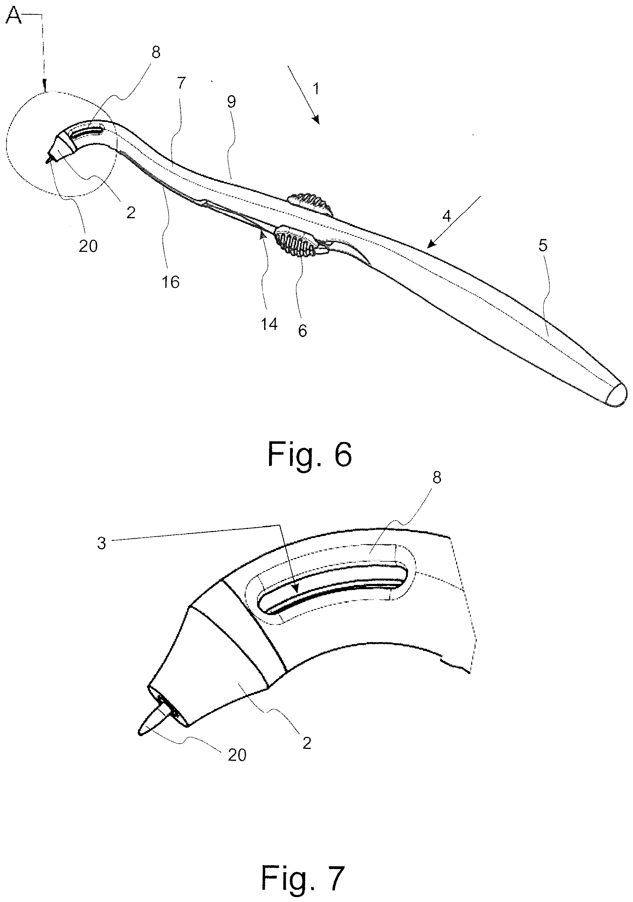

Ferner umfasst die Interdentalbürste 1 am Körper 4 ein Bedienelement 6. Im Führungskanal 7 ist ein Verbindungselement 9 mit einem Putzkörper 3 angeordnet, wobei das Verbindungselement 9 in dieser Figur nicht sichtbar ist (vgl. Fig. 2, 3). Das Verbindungselement ist in den nachfolgend beschriebenen Ausführungsformen, abweichend von der vorliegenden Erfindung, ein Stift 9. Der Putzkörper 3 kann z.B. ein Bürstchen sein, das geeignete Abmessungen für die Interdentalreinigung hat. Als Putzkörper kann aber auch ein Kunststoffträger mit Noppen oder Fasern zum Einsatz kommen. Weitere Ausgestaltungen des Putzkörpers 3 werden im Zusammenhang mit Fig. 6 - 16 näher beschrieben. Der Führungskanal 7 hat am distalen Ende ein flexibles Positionierelement 2. Im vorliegenden Dokument bezieht sich der Begriff "distal" auf den Griff 5, mit anderen Worten auf das freie Ende des Führungskanals 7, das vom Griff entfernt ist. Der Begriff "flexibel" ist im vorliegenden Kontext als "biegsam" und/oder "elastisch" zu verstehen. Mit anderen Worten ist das Positionierelement 2 in der Lage sich aufgrund seiner Flexibilität am Approximalraum zwischen zwei Zähnen anzuschmiegen.

In einer Mantelfläche des Führungskanals 7 ist eine Öffnung 8 vorgesehen, welche eine Luftzirkulation zwischen dem Innenraum des Führungskanals 7 und der Umgebung erlaubt. Die Öffnung 8 ist vorzugsweise in einem Bereich angeordnet, in dem der Putzkörper 3 in der eingezogenen Position zu ruhen kommt. Es ist auch möglich, mehrere Öffnungen 8 vorzusehen, beispielsweise kann die Mantelfläche des Führungskanals 7 mit Perforationen versehen sein.

Die Öffnung 8 kann aber auch als Einführungsöffnung für eine Medikation dienen. Der Innenraum des Führungskanals 7 übernimmt in diesem Fall die Aufgabe eines Medikationsreservoirs. Je nach Anwendung kann bei dieser Ausführungsform die Öffnung 8 verschliessbar sein, wenn eine grössere Menge der Medikation in den Innenraum des Führungskanals 8 eingebracht wird. In diesem Fall kann der Putzkörper 3 nach Erschöpfung der Medikation beim Putzen wiederholt in die eingezogene Position gebracht werden, um neue Medikation aufzunehmen. Aufgrund des Verschlusses der Öffnung 8 kann beim Hantieren mit der Interdentalbürste keine Medikation entweichen. Andererseits ist es auch möglich, keinen Verschluss vorzusehen, insbesondere wenn nur Einmaldosen der Medikation in den Innenraum eingebracht werden. Bei der Medikation kann es sich um Zahnpaste oder andere Mittel handeln, die dem Fachmann bekannt sind.

Wie in der Figur ersichtlich, ist der Führungskanal bezüglich einer Längsachse z des Griffs 5 gebogen. Dies erleichtert die Einführung des distalen Endes des Führungskanals 7 in den Mund, da die gebogene Form an eine natürliche Haltung der Hand angepasst ist.

Das Bedienelement 6 ist als Schieber ausgestaltet und vom Benutzer, insbesondere mittels eines Fingers, zur hin und her Verschiebung antreibbar. Das Bedienelement 6 kann aber auch doppelseitig ausgestaltet sein, so dass es mit zwei Fingern oder mit einem Finger wahlweise von einer Seite oder von der entgegengesetzten Seite bedienbar ist (vgl. Fig. 1). Alternativ kann das Bedienelement 6 von einem Motor zur hin und her Verschiebung, insbesondere mit einer einstellbaren Frequenz, antreibbar sein.

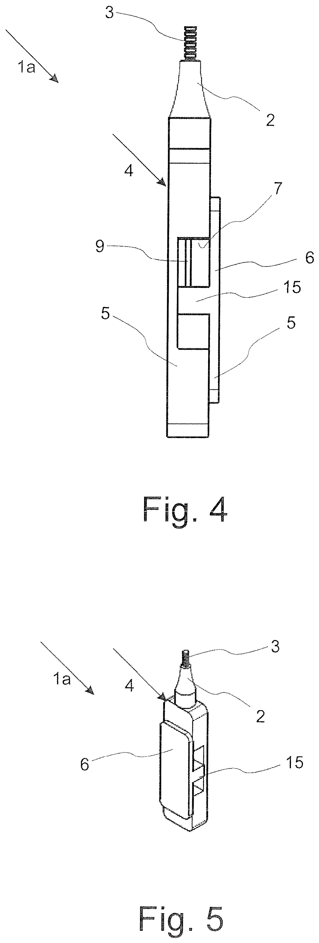

In Fig. 1 ist auch ersichtlich, dass der Körper 4 im Bereich des Führungskanals 7 einen länglichen Schlitz 16 aufweist. Dieser Schlitz 16 dient als Entlastung und teilweiser Ableitung einer Antriebskraft auf das Bedienelement 6 in radialer Richtung. Damit ergibt sich der Vorteil dass eine Verletzung im Mund vermieden wird. Beispielsweise kann bei Zahnengstand, also geschlossenem Trigorum, vermieden werden, dass der Benutzer zu fest an der beabsichtigten Putzstelle drückt. Dies könnte zu Verletzungen des Zahnfleischs führen, wenn der Putzkörper beispielsweise am Zahn abrutscht. Bei Zahnengstand biegt sich das in dieser Ausführungsform flexible Verbindungselement 7 und kann teilweise durch den Schlitz 16 nach aussen weichen und somit einen Teil der Druckkraft des Putzkörpers 3 aufnehmen, wodurch eine Verletzungsgefahr mindestens minimiert wird. Dabei ist der Schlitz 16 derart dimensioniert, dass das Verbindungselement in seinem im obigen Fall gebogenen Bereich durch den Schlitz 16 nach aussen dringen kann. Bei der Dimensionierung und Formgebung des Schlitzes 16 sind etwaige Breitenunterschiede entlang der Länge des Verbindungselements berücksichtigt. Dieses optionale Merkmal stellt ausser der Verwendung des flexiblen Positionierelements 2 einen weiteren Faktor dar, der eine "blinde" Verwendung der Interdentalbürste unterstützt. Es ist aber anzumerken, dass in anderen Ausführungsformen, z.B. aus Fig. 4 und 5, der Schlitz und die Flexibilität des Verbindungselements 9 nicht notwendigerweise gegeben sein müssen. In diesem später erläuterten Fall ist das Hauptaugenmerk eine kostengünstige Ausführung der Interdentalbürste. Für alle anderen Ausführungsformen ist aber das Verbindungselement 9 flexibel. Dies ist eine Folge der bevorzugten Form der Interdentalbürste 1 (Fig. 1, 3, 6) mit einem gebogenen distalen Ende, was im Zusammenhang mit Fig. 2 beispielhaft erläutert ist. Wie erwähnt erlaubt das gebogene distale Ende der Interdentalbürste 1 eine ergonomische Einführung in den Mundraum und ist daher gegenüber einer Lösung mit geradem distalem Ende bevorzugt. Ein weiterer Vorteil ist die Platzeinsparung, wobei bei der typischen Benutzung der Interdentalbürste im Mund der Platz zum Hantieren mit der Interdentalbürste 1 sehr begrenzt ist.

Figur 2 zeigt einen Stift 9 mit einem Putzkörper 3 für die Interdentalbürste 1 nach Fig. 1. In diesem Zusammenhang wird angemerkt, dass die Figuren nicht massstabsgetreu zueinander sind. Der Stift 9 ist aus einem flexiblen Material wie biegsamer Kunststoff hergestellt. Auf diese Weise kann sich der Stift während der hin und her Verschiebung an die gebogene Form des Führungskanals 7 anpassen. Im Gegensatz dazu ist der Führungskanal 7 vorzugsweise aus einem steifen Material hergestellt, um der Interdentalbürste 1 Stabilität zu verleihen.

Im Zusammenhang des steifen Materials wird angemerkt, dass der Begriff "steif" im Kontext des gesamten Dokuments als auf Biegesteifigkeit bezogen interpretiert ist. Dabei ist die Biegesteifigkeit so zu verstehen, dass sich der Körper bzw. der Führungskanal der Interdentalbürste beim Hantieren mit dieser im Mund nur vernachlässigbar verbiegen kann. Der Begriff "flexibel" ist im Zusammenhang mit der oben definierten Biegesteifigkeit zu verstehen, und zwar so, dass das Verbindungselement beim Verbiegen im Führungskanal nur eine vernachlässigbare Verbiegung des Führungskanals bewirkt und dass das Verbindungselement beim Verbiegen zwischen der eingezogenen und der ausgefahrenen Position und umgekehrt nicht knickt.

Der Stift 9 mit dem Putzkörper 3 ist vorzugsweise auswechselbar. Dabei können Ersatzputzkörper mit Stiften im Inneren des Griffs 5 der Interdentalbürste angeordnet sein. Verschiedene Ausgestaltungen von Putzkörpern 3 mit Verbindungselementen 9 sind in Fig. 6 - 16 gezeigt. Als Ersatzputzkörper können verschiedene Typen von Stift/Putzkörperkombinationen im Griff 5 aufbewahrt werden.

Der Stift 9 umfasst eine oder mehrere erste Ausbuchtungen 10, deren Ausdehnung dem Durchmesser des distalen Endes des Führungskanals 7 entsprechen. Dadurch hat der Stift 9 während der Verwendung einen besseren Halt im Führungskanal, was am besten in Fig. 3 zu sehen ist.

Ferner hat der Stift eine Putzkörperhalterung 11, die vorzugsweise der sich zuspitzenden Form des Positionierelements 2 entspricht. Dadurch wird einerseits verhindert, dass der Putzkörper 3 zu weit aus der Öffnung des Führungskanals 7 am distalen Ende der Interdentalbürste 1 hinausgeschoben werden kann und andererseits wird der Putzkörper 3 auf einfache Weise zentriert, so dass sie aus der Mitte der Öffnung hinausgeschoben wird.

Der Stift 9 gemäss Fig. 2 umfasst abweichend von der vorliegenden Erfindung eine zweite Ausbuchtung 12 für die Befestigung des Stifts 9 am Bedienelement 6. Dabei wird eine Clips-Verbindung verwendet. Mit anderen Worten hat das Bedienelement 6 eine Ausnehmung, sichtbar in Fig. 1 an der Stelle, an der die Linie des Bezugszeichens 6 aufhört, in der die zweite Ausbuchtung 12 des Stifts 9 eingeclipst werden kann.

In der gezeigten Ausführungsform ist der Putzkörper 3 zylindrisch, jedoch kann er auch andere Formen haben. Beispielsweise kann er zur Spitze hin trichterförmig sein.

Figur 3 zeigt einen Schnitt durch den Körper 4 der Interdentalbürste 1. Dabei ist insbesondere die Anordnung des Positionierelements 2, des Putzkörpers 3 und des Verbindungselements 9 im Führungskanal 7 in der eingezogenen Position des Putzkörpers 3 sichtbar.

In einer Ausführungsform ist das Positionierelement 2 austauschbar, insbesondere mit einem Positionierelement anderer Grösse und Form, wobei die Öffnung des Positionierelements nach aussen bei allen Ausführungen den gleichen Durchmesser hat. Es ist aber auch möglich, schmalere oder dickere Putzkörper zu verwenden, je nachdem wie gross die Approximalräume zwischen zwei Zähnen sind. In diesem Fall ist selbstverständlich das Positionierelement 2 an den Putzkörper 3 angepasst, was sein Durchmesser angeht. Dabei ist der Durchmesser des Positionierelements 2 etwas kleiner als der Durchmesser des Putzkörpers 3 gewählt. Nach Gebrauch der Interdentalbürste 1 kann der Putzkörper 3 besser gereinigt werden, indem er an der distalen Öffnung hin und her verschoben wird, so dass die Borsten des Putzkörpers 3 an den Kanten der Öffnung des Positionierelements 2 streifen. In dieser Ausführungsform handelt es sich beim Putzkörper um ein Bürstchen.

Wie erwähnt ist das Positionierelement 2 vorzugsweise aus einem flexiblen, biegsamen Material hergestellt. Dadurch wird sichergestellt dass während der Positionierung des distalen Endes, mit anderen Worten der distalen Öffnung, der Zahnschmelz bzw. das Zahnfleisch nicht angekratzt bzw. verletzt werden. Ferner wird dadurch ein unangenehmes Gefühl minimiert, wenn der Benutzer empfindliche Zähne oder Zahnhälse hat.

Im Folgenden wird der Gebrauch der Interdentalbürste 1 zusammenfassend beschrieben.

Als ersten Schritt wird ein Stift 9 mit Putzkörper 3 in die Interdentalbürste 1 eingeführt. Zu diesem Zweck umfasst der Körper 4 der Interdentalbürste 1 eine längliche Einführöffnung 14 (Fig. 1). Der Stift 9 wird mit dem Putzkörper 3 zuerst in den Führungskanal 7 eingeführt und die zweite Ausbuchtung 12 wird in die dafür vorgesehene Ausbuchtung des Bedienelements 6 eingeclipst. Anschliessend ist die Interdentalbürste 1 gebrauchsfertig. Zur Reinigung des Approximalraums zwischen zwei Zähnen wird das distale Ende der Interdentalbürste 1 in den Mund eingeführt und in die richtige Stellung positioniert, wobei der Putzkörper 3 in der eingezogenen Position gehalten wird. Aufgrund der Trichterform und des gebogenen distalen Endes ist die Positionierung des distalen Endes bzw. des Positionierelements 2 am Approximalraum leicht und intuitiv. Sobald das Positionierelement 2 an der richtigen Stelle ist, kann die Reinigung des betreffenden Zahnzwischenraums vorgenommen werden, indem der Putzkörper 3 in die ausgefahrene Position mittels des Bedienelements 6 gebracht und mittels Bewegung des Bedienelements 6 mit einem Finger hin und her verschoben wird. Alternativ kann der Motor eingeschaltet werden, der die hin und her Verschiebung des Stifts 9 übernimmt. Dabei muss der Putzkörper 3 nicht wieder in die eingefahrene Position gebracht werden, sondern er kann eine hin und her Verschiebung zwischen der komplett ausgefahrenen Position und einer Position, in der der Putzkörper 3 immer noch ausserhalb des Führungskanals 7 angeordnet ist, beschreiben.

Eine weitere Ausführungsform einer Interdentalbürste 1a, die hinsichtlich der Verbindung zwischen Verbindungselement und Bedienelement nicht erfindungsgemäss ausgestaltet ist, ist in Fig. 4 gezeigt. Im Folgenden wird nur auf die Unterschiede zu den bereits beschriebenen Ausführungsformen der Interdentalbürste eingegangen. Das Bedienelement 6 umfasst hier einen Steg 15, an dem das Verbindungselement 9 befestigt ist, wobei das Bedienelement 6 mit dem Steg 15, dem Verbindungselement 9 und dem Putzkörper 3 einstückig geformt sein kann. Der Steg 15 ist durch eine vorzugsweise beidseitige Aussparung im Körper 4 sichtbar (vgl. Fig. 4). Diese Aussparung dient dazu, Material zu sparen. Bei dieser Ausführungsform ist der Führungskanal 7 gerade und nicht gebogen ausgeführt. Aufgrund des einstückigen Aufbaus der bezogen auf den Körper 4 beweglichen Teile der Interdentalbürste 1a, der aussparungsbedingten Materialersparnis und der geraden Form ist die Interdentalbürste 1a billig in der Herstellung. Zusätzlich kann sie ausserdem sehr klein ausgeführt werden, so dass sie beispielsweise nur mit einem Daumen und einem Zeigefinger gehalten werden kann, was weiter zur Materialersparnis beiträgt. Sie eignet sich aus den oben genannten Gründen sehr gut als Wegwerf-Interdentalbürste und ist aufgrund ihrer kleinen Ausmasse sehr gut unterwegs nutzbar, wonach sie entsorgt werden kann.

In einer anderen, ebenfalls nicht erfindungsgemässen Ausführungsform kann nur das einstückige Ensemble aus Bedienelement 6, Verbindungselement 9 und Putzkörper 3 entsorgt werden, indem es durch die Aussparung entnommen wird, und durch ein frisches Ensemble ersetzt werden. In diesem Fall kann der Körper beispielsweise aus einem hochwertigen Material bestehen, bzw. Designelemente aufweisen.

In einer weiteren (nicht gezeigten) Variante der Ausführungsform 1a der Interdentalbürste kann der Führungskanal auf einer Seite entlang der Längsachse des Körpers offen sein, wobei das Verbindungselement den Innenraum des Führungskanals mit leichtem Spiel ausfüllen kann, so dass es darin hin und her schiebbar ist.

Fig. 5 zeigt eine perspektivische Ansicht der Ausführungsform aus Fig. 4 zur Verdeutlichung der Form und Anordnung der Aussparung und des Bedienelements 6. Bei dieser Ausführungsform 1a kann der Griff 5 teilweise durch das Bedienelement 6 und teilweise durch einen hinteren Teil des Körpers 4 gebildet sein. Der Benutzer hält dabei die Interdentalbürste 1a mit einem Fingern am Körper 4 und einem anderen Finger am Bedienelement 6.

Für die Ausführungsformen 1 und 1a kann das Verbindungselement 9 auch ein derartiges distales Ende haben, dass nur der Putzkörper 3 auswechselbar ist. Beispielsweise kann der Putzkörper 3 auf das distale Ende des Verbindungselements 9 aufgesteckt werden.

Im Folgenden wird nun eine erfindungsgemässe Ausführungsform der Interdentalbürste 1 beschrieben, wobei der Putzkörper 3 und das Verbindungselement 9 (Stift) als Putzorgan zusammengefasst werden.

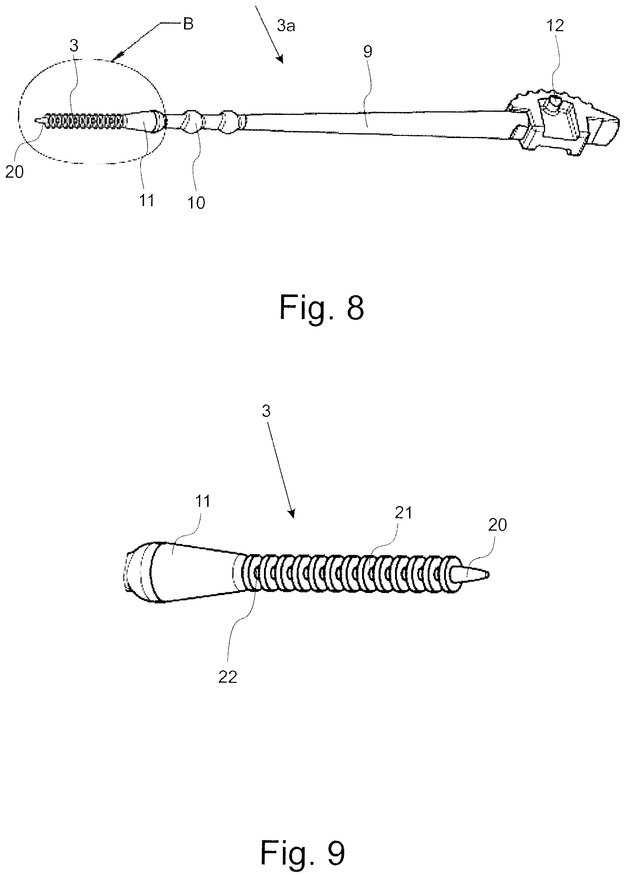

Die Interdentalbürste 1 aus Fig. 6 unterscheidet sich von derjenigen aus Fig. 1 unter anderem dadurch, dass der Putzkörper 3 anders ausgestaltet ist. Daher wird für die Beschreibung der restlichen Aspekte der Interdentalbürste 1 auf die Beschreibung der Fig. 1 verwiesen. Fig. 7 zeigt ein Detail A aus Fig. 6, mit einem spitzen, stabförmigen Element 20, das aus dem Positionierelement 2 hinausragt. Das stabförmige Element ist am freien Ende des Putzkörpers in Verlängerung eines Basiskörpers des Putzkörpers 3 angeordnet. Insbesondere trägt das spitze, stabförmige Element 20 keine Vorsprünge zum Putzen der Zähne. Der Putzkörper 3 mit dem Basiskörper sind in dieser Figur nicht sichtbar, da sie sich im Inneren des Führungskanals der Interdentalbürste 1 befinden (angedeutet mit dem Pfeil 3). Auf den Aufbau des Putzkörpers wird aber im Zusammenhang von Fig. 8 bis 16 näher eingegangen.

Es ist bevorzugt, dass das stabförmige Element 20 im gezeigten eingezogenen Zustand des Putzkörpers 3 bzw. des Putzorgans mindestens teilweise aus dem Positionierelement hinausragt, da dadurch die Positionierung der Interdentalbürste am Approximalraum zwischen zwei Zähnen zusätzlich zur diesbezüglichen Wirkung des Positionierelements 2 eine weitere Erleichterung bringt. Dabei ist das stabförmige Element 20 einstückig mit dem Putzkörper 3 und bevorzugt aus einem Gummi-basierten Material bzw. aus Teflon hergestellt und flexibel hinsichtlich Biegung, damit er die Zähne oder das Zahnfleisch nicht verletzt und besser in den Approximalraum eingefügt werden kann. Das stabförmige Element ragt aus dem Positionierelement zwischen 0.5 und 1.5 mm Millimeter hinaus, vorzugsweise ca. 1 mm, genug um die Positionierwirkung zu entfalten und das Einführen in den Mund nicht zu sehr zu stören. Es ist dabei bevorzugt dass das stabförmige Element 20 so weit hinausragt, dass seine Spitze eine derartige Steilheit hat, dass sie im Wesentlichen dem Verlauf des trichterförmigen Positionierelements 3 folgt. Dabei kann der Benutzer mit dieser Anordnung das stabförmige Element 20 an den Zähnen entlangstreifen um den zu reinigenden Approximalraum intuitiv zu finden. Dadurch wird die Positionierung der Interdentalbürste im Mund noch präziser und schneller, da das stabförmige Element ein noch empfindlicheres Ertasten des Reliefs der Zahnreihe als das dickere Positionierelement 2 ermöglicht. Wurde die richtige Position gefunden, so kann das Positionierelement am Approximalraum angesetzt werden und der distalen Spitze der Interdentalbürste 1 einen noch stabileren Halt geben. Dadurch dass das stabförmige Element bereits den Durchgang zwischen den Zähnen gefunden hat, wird der Putzkörper 3 bei anschliessender Betätigung des Bedienelements 6 direkt in die richtige Richtung geleitet.

Selbstverständlich ist es aber auch möglich das spitze, stabförmige Element 20 im eingezogenen Zustand des Putzorgans komplett in den Führungskanal der Interdentalbürste 1 einzuziehen, wobei diese Option zusätzlich zur obigen Ausführungsform oder alternativ vorgesehen werden kann. Beispielsweise ist es möglich, zwei Einziehpositionen vorzusehen, wobei die Position mit komplett eingezogenem Putzorgan beispielsweise bei der Verstauung der Interdentalbürste auf Reisen verwendet werden kann und die Position mit hinausragendem stabförmigen Element 20 bei der täglichen Zahnpflege zum Einsatz kommt.

Das spitze, stabförmige Element 20 ist selbstverständlich auch für die Ausführungsformen aus Fig. 1 bis 5 verwendbar.

Fig. 8 zeigt eine Ausführungsform eines erfindungsgemässen Putzorgans 3a und Fig. 9 eine Vergrösserung des Putzkörpers 3 des Putzorgans 3a. Für die Beschreibung der weiteren Elemente des Putzorgans 3a wird auf Fig. 2 verwiesen, die auch ein Putzorgan zeigt.

Das Putzorgan 3a umfasst generell einen Basiskörper 22 der mindestens einen Vorsprung trägt oder umfasst und in einer Putzkörperhalterung 11 gelagert ist. In der speziellen Ausführungsform nach Fig. 9 sind mehrere Vorsprünge 21 des Putzkörpers 3 vorgesehen, wobei die Vorsprünge 21 ringförmig und entlang dem Basiskörper 22 in einem konstanten Abstand voneinander um den Basiskörper 22 angeordnet sind. In dieser Ausführungsform haben die ringförmigen Vorsprünge einen gleichen Durchmesser.

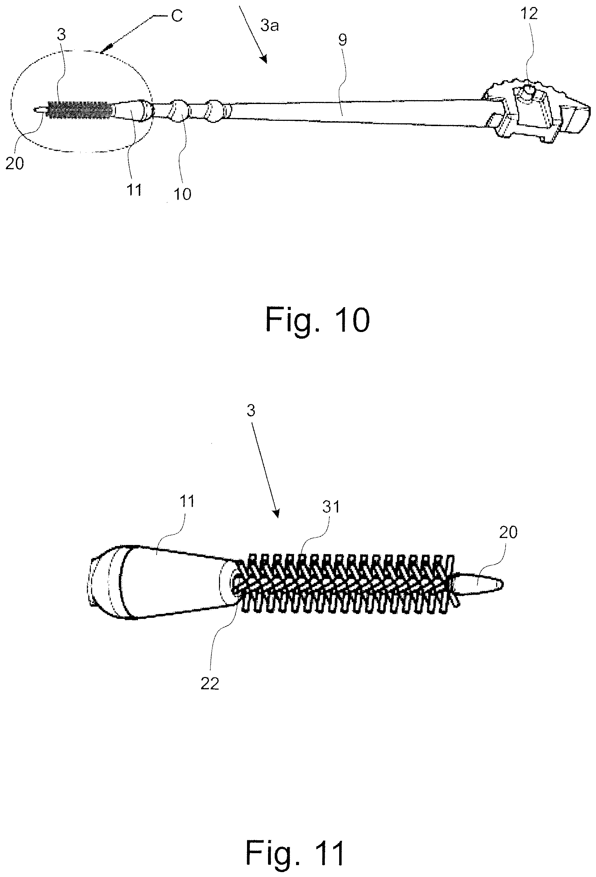

In einer anderen Ausführungsform (Fig. 10 und 11), die der Ausführungsform des Putzorgans nach Fig. 2 ähnelt, sind auch mehrere Vorsprünge 31 des Putzkörpers 3 vorgesehen, wobei in diesem Fall die Vorsprünge Filamente 31 sind und die Gesamtheit der Filamente 31 ein Bürstchen bilden.

In Fig. 8 und Fig. 10 sind Ausführungsformen des erfindungsgemässen Putzorgans 3a gezeigt. Sie entsprechen der Ausführungsform nach Fig. 2, wobei aber eine andere Art des Kopplungselements 12 vorhanden ist. Dieses ist hier nicht durch Ausbuchtung wie in Fig. 2, sondern durch einen Querstift durch den Körper des Verbindungselements 9 gegeben, der nach der Einführung des Putzorgans 3a in den Führungskanal 7 der Interdentalbürste 1 in dafür vorgesehene Aufnahmen des Körpers 5 der Interdentalbürste 1 aufgenommen wird. Erfindungsgemäss ist diese Verbindung eine Clips-Verbindung. Speziell ist bei dieser Ausführungsform (nicht gezeigt) die Aufnahme für das Kopplungselement 12 im Bedienelement 6 vorgesehen, wobei das Putzorgan 3a eine Fläche aufweist, die nach der Befestigung des Kopplungselements 12 bündig mit der Betätigungsfläche des Bedienelements 6 ist und vorzugsweise auch deren Riffelung bzw. Struktur hat.

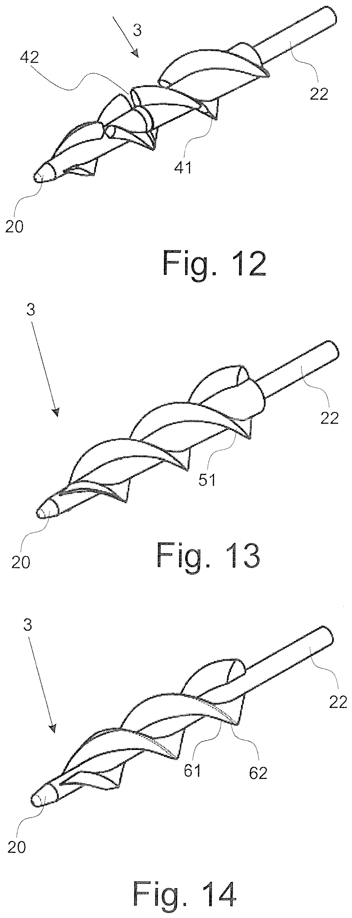

In Fig. 12 bis 15 sind Ausführungsformen des Putzkörpers 3 dargestellt bei denen sich der Vorsprung oder die Vorsprünge schraubenförmig oder spiralförmig entlang dem Basiskörper 22 um diesen erstreckt bzw. erstrecken. In diesem Zusammenhang wird angemerkt dass im Rahmen dieses Dokuments von einem einzigen Vorsprung die Rede ist, wenn dieser keine Unterbrechungen über seinen gesamten Querschnitt aufweist.

In Fig. 12 ist eine Ausführungsform eines Putzkörpers 3 dargestellt, bei der auch mehrere Vorsprünge 41 vorgesehen sind. Die Vorsprünge sind schraubenförmig angeordnet und benachbarte Vorsprünge 41 sind durch einen Spalt 42 voneinander getrennt.

Im Falle von Fig. 13 werden zwei Vorsprünge 51 verwendet, die schraubenförmig entlang des Basiskörpers 22 angeordnet sind und bezüglich auf die Schrauben-Form zueinander gegenläufig sind.

Fig. 14 zeigt eine Alternative bei der die Vorsprünge 61 wie bei der Ausführungsform aus Fig. 13 keine Unterbrechungen aufweisen. In diesem Fall sind die schraubenförmigen Vorsprünge breiter, so dass sie jeweils eine Schulter 62 an ihren freien Extremitäten bilden.

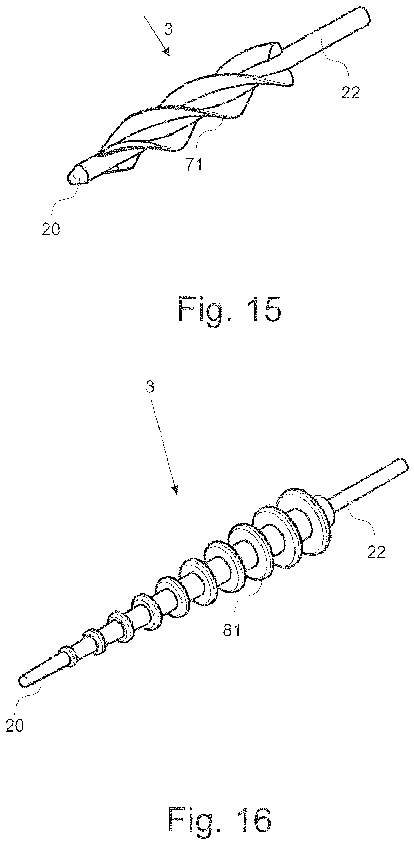

Fig. 15 zeigt eine Ausführungsform die den Ausführungsformen aus Fig. 13 und 14 ähnelt. Hier sind die Vorsprünge 71 schlanker. Selbstverständlich sind grundsätzlich bei den Ausführungsformen mit schraubenoder spiralförmigen Vorsprüngen Parameter wie Ganghöhe, Verschraubungsgrad (mittlerer Winkel des Vorsprungs zur longitudinalen Achse), Dicke veränderbar.

Fig. 16 zeigt eine Ausführungsform des Putzkörpers 3 die derjenigen aus Fig. 9 ähnelt, mit dem Unterschied dass sich der Durchmesser der Vorsprünge 81, die auch um den Basiskörper 22 herum angeordnet sind, zum stabförmigen Element 20 hin verkleinert und der Abstand zwischen benachbarte Vorsprünge 81 grösser ist.

Alle Ausführungsformen des Putzorgans sind vorzugsweise aus einem Material auf der Basis von Gummi oder Silikon hergestellt. Ferner ist es bevorzugt wenn der Putzkörper 3 in einem Stück gegossen wird, was seine Stabilität erhöht. Es kann aber auch vorgesehen sein, den Basiskörper 22 mit zusätzlichen Verstärkungsfasern in seinem Inneren versehen, um seine Steifigkeit zu erhöhen. Ein solcher Schritt hat kaum einen Einfluss auf die Einstückigkeit des Putzkörpers, da zunächst die Verstärkungsfasern platziert werden können und anschliessend die Hauptmasse des Basiskörpers 22 um diese herum gegossen werden kann.

Die beschriebenen Ausführungsformen der Interdentalbürste 1, 1a mit den zugehörigen Putzorganen 3a und Putzkörpern 3 haben einen einfachen Aufbau und sind leicht, insbesondere in der Version ohne Motor, was ihre Handhabung erleichtert. Dadurch dass die Bewegung des Putzkörpers 3 von ausserhalb des Munds bewirkt wird, wird die Reinigung erleichtert. Nicht zuletzt ist es vorteilhaft dass nicht die ganze Interdentalbürste 1, sondern nur der Stift 9 mit dem Putzkörper 3 bewegt werden muss. Dadurch wird eine ungewollte Verschiebung der Interdentalbürste 1 im Mund verhindert und die Gefahr, dass der Putzkörper 3 abgebrochen oder gebogen wird, wird minimiert.

In den entsprechenden Ausführungsformen sind die gebogene Form und das Vorhandensein des Positionierelements für die Verwendung sehr intuitiv. Wiederum sind die Ausführungsformen mit geradem Körper bzw. Führungskanal leichter herzustellen und daher billiger, so dass sie sich auch als Wegwerf-Interdentalbürsten eignen können.

Aufgrund des Positionierelements wird ferner die Einführung der Interdentalbürste ohne Sichtkontakt in das Trigonum zwischen Zahn, Nachbarzahn und Papille ermöglicht. Aufgrund der Postionier- und der Orientierungsfunktion des Positionierelements wird die Verletzungsgefahr praktisch ausgeschlossen. Ferner ermöglicht die erfindungsgemässe Interdentalbürste aufgrund der Einführund Abstützfunktion des Positionierelements auch eine schiefwinklige Einführung in den Mund, ohne Sichtkontakt. Das Positionierelement hat eine Referenzfunktion, die es ermöglicht, die Interdentalbürste in freier Bewegung durch den Approximalraum hin und her zu bewegen, sobald das Einschieben einmal stattgefunden hat. Ein weiterer Vorteil der erfindungsgemässen Interdentalbürste besteht darin, dass das Einknicken des Putzkörpers während dem Einführen verhindert wird, da das Positionierelement ausser seinen anderen Funktionen auch eine Schutzfunktion für den Putzkörper besitzt. Schliesslich hat das Positionierelement bei der Reinigung der Interdentalbürste unter fliessendem Wasser eine Plaqueabstreiffunktion.

Obwohl bevorzugte Ausführungsformen der Erfindung beschrieben worden sind wird darauf hingewiesen, dass die Erfindung auf anderen Weisen im Rahmen der nachfolgenden Ansprüchen realisiert werden kann. Dabei beziehen sich in der Beschreibung verwendete Begriffe wie "bevorzugt", "insbesondere", "vorteilhaft", etc. nur auf optionale und beispielhafte Ausführungsformen.

## Patentansprüche

1. Interdentalbürste (1) umfassend
- einen Körper (4) mit einem Griff (5) und einem Führungskanal (7),
- ein im Führungskanal angeordnetes Verbindungselement (9), das einen Putzkörper (3) mit einem Bedienelement (6) verbindet,
wobei das Verbindungselement (9) mit dem Putzkörper (3) mittels des Bedienelements (6) hin und her zwischen einer eingezogenen Position, in der der Putzkörper (3) innerhalb des Führungskanals (7) angeordnet ist, und einer ausgefahrenen Position, in der der Putzkörper (3) an einem distalen Ende des Führungskanals (7), bezogen auf den Griff (5), aus dem Führungskanal (7) hinausragt, verschiebbar ist,
wobei am distalen Ende des Führungskanals (7) ein flexibles Positionierelement (2) vorgesehen ist, wobei das Positionierelement (2) zum distalen Ende hin im Wesentlichen trichterförmig verläuft,
wobei das Positionierelement (2) an einem Approximalraum zwischen zwei Zähnen derart ansetzbar ist, dass der Putzkörper (3) während der Verschiebung in die ausgefahrene Position in den Approximalraum hineindringt,
wobei die hin und her Verschiebung des Putzkörpers (3) durch eine Bewegung des Bedienelements (6) relativ zum Positionierelement (2) der Interdentalbürste (1) bewirkbar ist,
wobei das Verbindungselement (9) mit dem Putzkörper (3) auswechselbar ist,
**dadurch gekennzeichnet, dass** das Verbindungselement (9) mittels einer Clips-Verbindung am Bedienelement (6) befestigbar ist, wobei das Verbindungselement (9) ein Kopplungselement (12) in Form eines Querstifts durch das Verbindungselement (9) aufweist, und wobei das Bedienelement (6) eine Aufnahme für das Kopplungselement (12) aufweist.

2. Interdentalbürste nach Anspruch 1, wobei das Verbindungselement (12) eine Fläche aufweist, die bündig mit einer Betätigungsfläche des Bedienelements (6) ist.

3. Interdentalbürste nach Anspruch 2, wobei die Betätigungsfläche des Bedienelements (6) eine Struktur, insbesondere eine Riffelung, aufweist, und wobei die bündig mit der Betätigungsfläche verlaufende Fläche des Verbindungselements (9) eine Struktur aufweist, die identisch zur Struktur der Betätigungsfläche ist.

4. Interdentalbürste nach einem der vorangehenden Ansprüche, wobei der Körper (4) im Bereich des Führungskanals (7) einen länglichen Schlitz (16) aufweist, der derart dimensioniert ist, dass ein gebogener Bereich des Verbindungselements (9) durch den Schlitz nach aussen dringen kann, wenn sich das Verbindungselement (9) bei zu hohem Druck aufgrund Zahnengstands verbiegt.

5. Interdentalbürste nach einem der vorangehenden Ansprüche, wobei das Verbindungselement (9) als Stift ausgebildet ist, der mindestens eine Ausbuchtung (10) aufweist, deren Ausdehnung dem Durchmesser des distalen Endes des Führungskanals (7) entspricht, um den Halt des Stiftes im Führungskanal (7) zu verbessern.

6. Interdentalbürste nach einem der vorangehenden Ansprüche, wobei der Führungskanal (7) aus einem steifen Material hergestellt ist und in Bezug auf eine Längsachse (z) des Körpers (4) mindestens eine Biegung aufweist, derart, dass das freie Ende des Führungskanals (7) nicht parallel zur Längsachse (z) ist.

7. Interdentalbürste nach einem der vorangehenden Ansprüche, wobei das Bedienelement (6) als Schieber ausgestaltet ist und vom Benutzer, insbesondere mittels eines Fingers, zur hin und her Verschiebung antreibbar ist.

8. Interdentalbürste nach einem der vorangehenden Ansprüche, wobei der Körper (4) eine längliche Einführungsöffnung (14) aufweist, durch welche das Verbindungselement (9) mit dem Putzkörper (3) in den Führungskanal (7) einführbar ist.

9. Putzorgan (3, 9; 3a) für eine Interdentalbürste nach einem der vorangehenden Ansprüche, umfassend einen Putzkörper (3) und ein Verbindungselement (9) oder bestehend aus einem Putzkörper (3) und einem Verbindungselement (9), wobei der Putzkörper in axialer Richtung des Verbindungselements an dessen distalem Ende angeordnet ist, wobei das Verbindungselement aus einem bezüglich Biegung flexiblen Material hergestellt ist und mittels eines Kopplungselements (12) des Verbindungselements (9) im Führungskanal (7) der Interdentalbürste (1) befestigbar ist, **dadurch gekennzeichnet, dass** das Verbindungselement (9) derart ausgestaltet ist, dass es mittels einer Clips-Verbindung am Bedienelement (6) befestigbar ist, wobei das Kopplungselement (12) in Form eines Querstifts durch das Verbindungselement (9) ausgebildet ist.

10. Putzorgan nach Anspruch 9, wobei das Verbindungselement (9) im Bereich des Kopplungselements (12) eine Fläche mit einer Struktur, insbesondere einer Riffelung, aufweist.

11. Putzorgan nach Anspruch 9 oder 10, wobei der Putzkörper (3) einen Basiskörper (22) mit mindestens einem Vorsprung (21; 31; 41; 51; 61; 71; 81) umfasst und wobei am freien Ende des Putzkörpers (3) ein spitzes, stabförmiges Element (20) des Putzkörpers (3) in Verlängerung des Basiskörpers (22) vorgesehen ist.

## Claims

1. An interdental brush (1) comprising
- a body (4) having a handle (5) and a guide duct (7);
- a connection element (9) that is disposed in the guide duct and connects a cleaning body (3) to an operating element (6);
wherein the connection element (9) with the cleaning body (3) is displaceable by means of the operating element (6) in a reciprocating manner between a retracted position in which the cleaning body (3) is disposed within the guide duct (7), and a deployed position in which the cleaning body (3) at an end of the guide duct (7) that is distal in relation to the handle (5) protrudes from the guide duct (7);
wherein a flexible positioning element (2) is provided at the distal end of the guide duct (7), wherein the positioning element (2) runs toward the distal end in a substantially funnel-shaped manner;
wherein the positioning element (2) at an approximal space between two teeth is engageable in such a manner that the cleaning body (3) during the displacement to the deployed position ingresses into the approximal space,
wherein the reciprocating displacement of the cleaning body (3) is capable of being caused by a movement of the operating element (6) relative to the positioning element (2) of the interdental brush (1), wherein the connection element (9) is interchangeable with the cleaning body (3),
**characterized in that** the connection element (9) is fastenable to the operating element (6) by means of a clip connection, wherein the connection element (9) comprises a coupling element (12) in the form of a transverse pin through the connection element (9), and wherein the operating element (6) comprises a receptacle for the coupling element (12) .

2. The interdental brush as claimed in claim 1, wherein the coupling element (12) comprises a surface which is flush with an activation surface of the operating element (6).

3. The interdental brush as claimed in claim 2, wherein the activation surface of the operating element (6) comprises a structure, preferably in the form of serrations, and wherein the surface of the connection element (9) which is flush with the activation surface comprises a structure which is identical to the structure of the activation surface.

4. The interdental brush as claimed in one of the preceding claims, wherein the body (4), in the region of the guide duct (7) comprises an elongate slot (16), which is dimensioned in such a manner, that a bent region of the connection element (9) can penetrate outwardly through the slot, when the connection element (9) deflects in case of a too high compression force due to tight spacing of the teeth.

5. The interdental brush as claimed in one of the preceding claims, wherein the connection element (9) is formed as a pin which comprises at least one convexity (10), the extent of which corresponds to the diameter of the distal end of the guide duct (7), in order to improve the retention of the pin in the guide duct (7).

6. The interdental brush as claimed in any one of the preceding claims, wherein the guide duct (7) is produced from a rigid material and in relation to a longitudinal axis (z) of the body (4) has at least one curvature in such a manner that the free end of the guide duct (7) is not parallel with the longitudinal axis (z).

7. The interdental brush as claimed in any one of the preceding claims, wherein the operating element (6) is designed as a slide and for the reciprocating displacement is drivable by the user, in particular by means of one finger.

8. The interdental brush as claimed in any one of the preceding claims, wherein the body (4) has an elongate introduction opening (14) through which the connection element (9) with the cleaning body (3) is introducible into the guide duct (7).

9. A cleaning device (3, 9; 3a) for an interdental brush as claimed in one of the preceding claims, comprising a cleaning body (3) and a connection element (9), or being composed of a cleaning body (3) and a connection element (9), wherein the cleaning body in the axial direction of the connection element is disposed on the distal end of the latter, wherein the connection element is produced from a material that in terms of flexure is flexible, and by means of a coupling element (12) of the connection element (9) is fastenable in the guide duct (7) of the interdental brush (1), **characterized in that** the connection element (9) is formed in a manner such that it is fastenable to the operating element (6) by means of a clip connection, wherein the coupling element (12) is formed as a transverse pin through the connection element (9).

10. The cleaning device as claimed in claim 9, wherein the connection element (9) comprises, in the region of the coupling element (12), a surface with a structure, preferably in the form of serrations.

11. The cleaning device as claimed in claim 9 or 10, wherein the cleaning body (3) comprises a main body (22) having at least one protrusion (21; 31; 41; 51; 61; 71; 81), and wherein a pointed rod-shaped element (20) of the cleaning body (3) is provided at the free end of the cleaning body (3), so as to be in the extension of the main body (22).

## Revendications

1. Brosse interdentaire (1) comprenant
- un corps (4) ayant une poignée (5) et un canal de guidage (7);
- un élément de liaison (9) qui est disposé dans le canal de guidage et qui relie un corps de nettoyage (3) à un élément d'actionnement (6);
dans laquelle l'élément de liaison (9) avec le corps de nettoyage (3) peut être déplacé au moyen de l'élément d'actionnement (6) en va-et-vient entre une position rétractée dans laquelle le corps de nettoyage (3) est disposé à l'intérieur du canal de guidage (7), et une position déployée dans laquelle le corps de nettoyage (3) fait saillie du canal de guidage (7) à une extrémité distale du canal de guidage (7) par rapport à la poignée (5) ;
dans laquelle un élément de positionnement flexible (2) est prévu à l'extrémité distale du canal de guidage (7), l'élément de positionnement (2) s'étendant vers l'extrémité distale essentiellement en forme d'entonnoir;
dans laquelle l'élément de positionnement (2) peut être positionné au niveau d'une embrasure entre deux dents de telle manière que le corps de nettoyage (3) pénètre dans l'embrasure lors du déplacement vers la position déployée,
dans laquelle le déplacement en va-et-vient du corps de nettoyage (3) peut être provoqué par un mouvement de l'élément d'actionnement (6) par rapport à l'élément de positionnement (2) de la brosse interdentaire (1),
dans laquelle l'élément de connexion (9) est interchangeable avec le corps de nettoyage (3),
**caractérisé en ce que** l'élément de liaison (9) peut être fixé à l'élément d'actionnement (6) au moyen d'une liaison par clip, l'élément de liaison (9) présentant un élément de couplage (12) sous forme d'une tige transversale traversant l'élément de liaison (9), et l'élément d'actionnement (6) présentant un logement pour l'élément de couplage (12).

2. Brosse interdentaire selon la revendication 1, dans laquelle l'élément de couplage (12) comprend une surface qui affleure une surface d'activation de l'élément d'actionnement (6).

3. Brosse interdentaire selon la revendication 2, dans laquelle la surface d'activation de l'élément d'actionnement (6) comprend une structure, de préférence sous la forme de dentelures, et dans laquelle la surface de l'élément de connexion (9) qui affleure la surface d'activation comprend une structure qui est identique à la structure de la surface d'activation.

4. Brosse interdentaire selon l'une quelconque des revendications précédentes, dans laquelle le corps (4) présente, dans la zone du canal de guidage (7), une fente allongée (16), qui est dimensionnée de telle sorte qu'une zone coudée de l'élément de liaison (9) peut migrer vers l'extérieur à travers la fente, lorsque l'élément de liaison (9) se déforme en cas de force de compression trop élevée due à un espacement étroit des dents.

5. Brosse interdentaire selon l'une quelconque des revendications précédentes, dans laquelle l'élément de liaison (9) est réalisé sous la forme d'une tige qui présente au moins une convexité (10) dont l'étendue correspond au diamètre de l'extrémité distale du canal de guidage (7), afin d'améliorer la rétention de la tige dans le canal de guidage (7).

6. Brosse interdentaire selon l'une quelconque des revendications précédentes, dans laquelle le canal de guidage (7) est réalisé dans un matériau rigide et présente par rapport à un axe longitudinal (z) du corps (4) au moins une courbure de telle sorte que l'extrémité libre du canal de guidage (7) n'est pas parallèle à l'axe longitudinal (z).

7. Brosse interdentaire selon l'une quelconque des revendications précédentes, dans laquelle l'élément d'actionnement (6) est conçu comme un coulisseau et, pour le déplacement en va-et-vient, peut être entraîné par l'utilisateur, en particulier au moyen d'un doigt.

8. Brosse interdentaire selon l'une quelconque des revendications précédentes, dans laquelle le corps (4) présente une ouverture d'introduction allongée (14) à travers laquelle l'élément de liaison (9) avec le corps de nettoyage (3) peut être introduit dans le canal de guidage (7).

9. Dispositif de nettoyage (3, 9 ; 3a) pour une brosse interdentaire selon l'une quelconque des revendications précédentes, comprenant un corps de nettoyage (3) et un élément de liaison (9), ou étant composé d'un corps de nettoyage (3) et d'un élément de liaison (9), le corps de nettoyage étant disposé dans la direction axiale de l'élément de liaison à l'extrémité distale de celui-ci, l'élément de liaison étant fabriqué dans un matériau flexible en termes de flexion et pouvant être fixé au moyen d'un élément de couplage (12) de l'élément de liaison (9) dans le canal de guidage (7) de la brosse interdentaire (1), **caractérisé en ce que** l'élément de liaison (9) est conçu de manière à pouvoir être fixé à l'élément d'actionnement (6) au moyen d'une liaison par clip, l'élément de couplage (12) étant conçu comme une tige transversale traversant l'élément de liaison (9).

10. Dispositif de nettoyage selon la revendication 9, dans lequel l'élément de liaison (9) comprend, au niveau de l'élément de couplage (12), une surface présentant une structure, de préférence sous la forme de dentelures.

11. Dispositif de nettoyage selon la revendication 9 ou 10, dans lequel le corps de nettoyage (3) comprend un corps principal (22) présentant au moins une saillie (21 ; 31 ; 41 ; 51 ; 61 ; 71 ; 81), et dans lequel un élément en forme de tige pointue (20) du corps de nettoyage (3) est prévu à l'extrémité libre du corps de nettoyage (3), de manière à être dans le prolongement du corps principal (22).
